# NEW EUROPEAN PATENT SPECIFICATION

(11) **EP 0 244 149 B2**
(45) Date of publication and mention of the opposition decision: **18.09.1996**
(45) Mention of the grant of the patent: 15.04.1992
(21) Application number: 87303514.1
(22) Date of filing: 22.04.1987
(51) Int. Cl.: A23L 1/236, A23L 1/30, C13F 3/00, A23L 2/38, A21D 2/18

(54) **Dry foodstuffs mixes**
Trockenes Nahrungsmittelgemisch
Mélanges alimentaires secs

(30) Priority: 23.04.1986 US 855540
(43) Date of publication of application: 04.11.1987
(73) Proprietor: A.E. STALEY MANUFACTURING COMPANY, Decatur Illinois 62521 (US)
(72) Inventor: Batterman, Cynthia K., Decatur Illinois 62526 (US); Augustine, Michael E., Decatur Illinois 62521 (US); Dial, James R., Moweaqua Illinois 62550 (US)
(74) Representative: Cockbain, Julian, Dr.

(56) References cited:
- EP-A- 0 036 738
- DD-A- 141 994
- FR-A- 2 073 165
- FR-A- 2 144 939
- US-A- 3 836 396
- Agr. Biol. Chem. . vol. 34, no. 2, 1970. Yamaguchi et al., "Studies on the taste of some sweet substances", page 187-197
- "Carbohydrate sweeteners in food and nutrition", Koivistoinen et al., "Modification of Sweetness by food environment ", 1980, Academic Press, vol. 34, 1980
- Getreide-Mehl-Brot, vol. 34, 1980, Ludewig et al., "Einfluss verschiedener Zuckerarten bei feinen Backwaren", page 206-215
- Sweeteners, Osberger et al., "Consumer dictates expand fructose markets", 1978, page 32 and 34
- Koivistoinen & Hyvönen, "Carbohydrate sweeteners in foods and nutrition", Doty, "Fructose: the rationale for traditional and modern uses", 1980, Academic Press, London, page 259-267
- Journal of food science, vol. 43, 1978, L. Hyvönen et al., "Fructose-saccharin and xylitol-saccharin synergism", page 251-254
- Food Technology, vol. 11, 1975, T.E. Doty et al., "Crystalline fructose: Use as a food ingredient expected to increase", page 34-38.

## Description

The present invention relates to the field of dry foodstuffs mixes and particularly to new ingredient sparing agents for use in such mixes.

Dry foodstuffs mixes, e.g. cake mixes, cookie mixes, pie filling mixes, desert mixes, beverage mixes, etc. generally contain flavourings and sweeteners together with other ingredients designed to achieve an organoleptic effect, such as food acids, starches, gelatins, bodying agents, colours and the like.

There are however developing trends towards reducing the calorie content of convenience foods ad also towards reducing the use of food additives in general.

In the case of calorie reduction, this has frequently been achieved by substituting for sucrose other sweeteners such as artificial or high intensity sweeteners like saccharin and aspartame. Similarly the use of caloric sweeteners other than sucrose, such as fructose has become more common in recent years. Thus the extra sweetness of fructose (reported by Hardy et al. [J. Am. Dietetic Assoc. 74(l): 41-46, January 1979] to be l.0 - l.8 times as sweet as sucrose when evaluated under similar conditions) has allowed the formulation of foodstuffs which, containing less sweetener than equivalent foodstuffs sweetened to the same degree with sucrose alone, are lower in calorie content. The sources of fructose for such uses have been crystalline fructose and 90% fructose liquid corn syrup. Thus, since crystalline fructose is expensive as compared with sucrose, the use of dry fructose-based sweeteners in the formulation of dry foodstuffs mixes has not been particularly attractive.

In the field of sweeteners in general, it may be that it is known that combinations of sweeteners may exhibit a synergistic effect in terms of perceived sweetening effect. Thus Hyvonen et al. (J. Food Sci. 43: 251-254, 1978) have demonstrated a synergistic effect on perceived sweetness for combinations of fructose and saccharin and other sweeteners; Doty and Vanninen (Food Technology 11 : 34-38, 1975) have demonstrated such an effect for a 10% aqueous solution of a 60:40 fructose/sucrose mixture; and Pitchon et al. (US-A-4303684) have proposed a rapidly soluble low density sweetener comprising a solid solution of fructose and sucrose. The Pitchon et al. composition comprised 15-65% fructose, 30-65% sucrose and 15-30% of a low dextrose equivalent (D.E.) dextrinized starch binder, spray dried under specific conditions to yield an essentially amorphous low density product. It is also known from US-A-3836396 that the sucrose content of sugar compositions may be partially replaced by fructose and/or maltose in order to reduce the cariogenicity of the compositions without substantially altering their perceived sweetness. Sweetening materials in which traditional sweeteners are substituted in whole or in part by fructose, mannitol or sorbitol have also been described in FR-A-2144939 in relation to certain medical diets.

We have now found however that the use of a dry fructose/sucrose combination as the sweetener in dry foodstuffs mixes surprisingly results in an enhancement of the organoleptic effects of certain of the other ingredients in such mixes, specifically food acids, flavourings, starches and gelatin. Thus by the use of the fructose/sucrose combination the total quantity of such further ingredients and also the overall calorie content of the mix may be reduced. Moreover the reduction in calorie content may arise not only from the enhanced sweetness of the fructose/sucrose combination relative to sucrose alone but also from the reduction in starch or gelatin content where such ingredients are present and this combined effect of calorie reduction and ingredient sparing is sufficient to justify the use of the relatively expensive dry fructose as a dry foodstuffs mix ingredient.

Thus viewed from one aspect the present invention provides a dry, reduced-calorie foodstuffs mix comprising a saccharide-based sweetener together with at least one further foodstuffs component selected from food acids, flavourings, starches and gelatin, characterized in that the saccharide components of said sweetener consist substantially entirely of sucrose and fructose, the sucrose and fructose being present in crystalline form in a weight ratio of from 1.85:1 to 1:1.85, and in that at least one of said further components is present in an amount less than that sufficient to achieve the same organoleptic effect were the foodstuffs mix to be sweetened to the same degree by sucrose alone.

The dry mix of the invention is a reduced calorie mix insofar as the total calorie content is lower than would be the case were the mix to be sweetened to the same degree using sucrose alone. By "dry" it is meant that the mix is a solid, preferably a powder or a granular or granulatable mass, of essentially dry appearance.

The sweetener used in the preparation of the foodstuffs mixes of the invention is derived from the mono- and di-saccharide components sucrose and fructose. It is preferred that the sucrose component be at least 90% (preferably 95% and most preferably 99%) sucrose. It is preferred that the fructose component be at least 90% (preferably 95% and most preferably 99%) fructose.

The sweetener may be prepared by dry blending the components or by co-processing the components to yield a dry product, preferably comprising essentially only sucrose and fructose.

Relative sweetness of various sweeteners can be evaluated by several techniques. One technique commonly used is the Relative Sweetness Test in which water-sweetener solutions containing 10% dry solids are prepared; the temperature of the solution is adjusted to about 20°C; and the solution is evaluated by persons trained in sensory evaluation. Using such a technique, sucrose is arbitrarily defined as 100%. Other sweeteners are then ranked relative to sucrose. Fructose usually has a Relative Sweetness of about ll5% as determined by this particular evaluation technique.

The sweetness of a blend of two sweeteners might be expected to be the weighted average of the relative sweetness of the two components. It has been found, however, that a synergism results when sucrose and fructose are blended together within a certain range. In accordance with the present invention the range for the ratio of sucrose to fructose is from about l.85:l to about l:l.85. This is equivalent to a range of about 35-65% sucrose with fructose present in an amount (35-65%) to total l00%. The Relative Sweetness of such a sweetener composition is about l20% or more. In a preferred embodiment, the ratio of sucrose to fructose in the sweetener is in the range of from about l.5:l to l:l.5. This is equivalent to a range of about 40-60% sucrose with fructose present in an amount (40-60%) to total l00%. The Relative Sweetness of this preferred composition is about l25% or more. In a particularly preferred embodiment, the ratio of sucrose to fructose in the sweetener is in the range of from about l.22:l to l:l.22. This is equivalent to a range of about 45-55% sucrose with fructose present in an amount (45-55%)to total l00%. The Relative Sweetness of the particularly preferred composition is about l30% or more.

The resulting increased Relative Sweetness of the saccharide blend of this invention allows food products to be formulated with less sweetener than traditionally used when the sweetener is essentially all sucrose or all fructose. When using the sweetener composition hereof (sucrose to fructose in the range of about l.85:l.0 to about l.0:l.85), the amount of sweetener used in a food composition can be reduced by about 17% as compared to all sucrose sweetener. The use of the particularly preferred composition (sucrose to fructose in the range of about l.22:l to l.0:l.22) allows the level of sweetener in a food composition to be reduced by as much as about 23% as compared to all sucrose sweetener.

The reduction in sweetener required for food compositions is important as it reduces the calorie contribution from the sweetener components.

Another benefit derived from the use according to the present invention of the sucrose-fructose sweetener composition is the reduced requirement for food acids in certain acidified foodstuffs mixes. Such mixes include mixes for or for addition to beverages (both powdered drink mix and dilutable drinks), fruit flavoured gelatins, flavour carriers, pudding and pie fillings (e.g. lemon, lime or other fruit flavours), fruit pies, fruit yoghurt flavourings, fruit fillings for baked goods, cookies and any other food product that contains sweetener and acid.

Acid levels in foods prepared according to the present invention can typically be reduced by about 5 or l0% as compared to the acid levels in sucrose sweetened foods. Food acids typically used in acidifying such foods include citric acid, ascorbic acid, adipic acid,' maleic acid, fumaric acid, succinic acid, tartaric acid, phosphoric acid, and hydrochloric acid and mixtures and sources thereof.

Still another advantage of the use of a sucrosefructose sweetener composition in the mixes of this invention is the effect of the sweetener on added flavours. The sweetener composition allows the formulation of food products with lower levels of added flavours as compared to all sucrose sweetened foods. The sucrose-fructose sweetener combination enhances flavours of sweetened food products. The enhancement occurs with natural and imitation flavours and is particularly effective with fruit flavours.

The sucrose-fructose sweetener composition is also useful as a carrier for dried flavour systems. An example would be the spray drying of a mixture of imitation or natural flavour in an aqueous solution of sucrose and fructose. The resulting dry product could be used at reduced levels in beverage mixes and other foodstuffs mixes since the sucrose-fructose composition would enhance the flavour.

It has also been discovered that the sucrose-fructose sweetener composition has a gelatin sparing effect when used in gelatin containing foods. The level of gelatin in foods, such as gelatin dessert products, can be reduced by about 5% when the sucrose-fructose sweetener is used as compared to all sucrose sweetener.

Baked products such as cookies, cakes, brownies and the like can be prepared using mixes containing the sucrose-fructose sweetener composition. The incorporation of the fructose-containing sweetener into the baked products tends to provide a smoother cake-like texture in the baked products. When sucrose alone is used as the sweetener in baked foods, the baked food has a slightly heavier, less cake-like texture. The sucrose-fructose sweetener composition yields baked products that have smooth, fluffier, cake-like texture with more volume than an all sucrose sweetened product. The sucrose-fructose sweetening composition is especially useful in dry mix baking products sold in retail stores or through food service companies for preparation by the end user. The fructose portion of the sweetener composition is humectant which makes this sweetener composition an excellent humectant for baked foods and confectionery products. Baked goods prepared with the sweetener composition have a longer shelf life than baked goods prepared with sucrose as the only sweetener.

The sucrose-fructose sweetener composition has also been found to have a starch sparing effect in products such as puddings, particularly instant puddings. The amount of starch used in such formulations can be reduced by at least 5% and even by about 25 to 50%, when the sweetener blend is used to replace sucrose. The effect is more dramatic when the sweetener composition contains more fructose such as a ratio of l.85 parts fructose to l.0 part sucrose. The viscosity of the finished pudding is not adversely affected. The starch reductions are paticularly effective when Staley Mira-Gel 463, or other starches similar to Mira-Gel 463, are used to thicken a pudding or pie filling. The starch reduction also occurs when the sweetener composition is used for acidified pie fillings such as lemon, lemon-lime and similar types of fruit flavoured desserts

Viewed from a yet further aspect, the invention provides a process for preparing a dry foodstuffs mix, said process comprising a mixing a saccharide-based sweetener together with at least one further foodstuffs component selected from food acids, flavourings, starches and gelatin, characterized in that as said sweetener is used a sweetener the saccharide components of which consist substantially entirely of sucrose and fructose, the sucrose and fructose being present in crystalline form in a weight ratio of from 1.85:1 to 1:1.85, and in that at least one of said further components is used in an amount less than that sufficient to achieve the same organoleptic effect were the foodstuffs mix to be sweetened to the same degree by sucrose alone.

Viewed from a yet further aspect the invention provides the use of a foodstuffs mix according to the invention for the preparation of an edible foodstuff.

The sucrose-fructose sweetener composition is sweet, soluble in water, stable in aqueous solutions and stable to heat processing conditions encountered in the processing of foods.

Thus viewed from another aspect the invention provides a foodstuffs ingredient sparing agent in dry form consisting substantially entirely of crystalline sucrose and crystalline fructose, the sucrose and fructose being present in a weight ratio of from 1.85:1 to 1:1.85.

The sparing agent of the invention is useful as a sweetening ingredient in the preparation of a wide variety of materials which are intended for consumption or at least contact with the mouth of the user, such materials being herein generically designated as edible materials or foodstuffs. Typical illustrative examples of edible foodstuffs which may be sweetened using the sparing agent according to this invention are dry foodstuffs mixes, fruits, vegetables, juices or other liquid preparations made from fruits or vegetables, meat products, particularly those conventionally treated with sweetened liquors, such as bacon and ham, milk products such as chocolate dairy drinks, egg products, such as eggnogs, custards, angel food mixes, salad dressings, pickles and relishes, ice creams, sherberts and ices, ice milk products, bakery products, icings, confections and confection toppings, syrups and flavours, cake and pastry mixes, beverages, such as carbonated soft drinks, fruit aids, wines, dietary-type foods, cough syrups and other medicinal preparations such as toothpastes, powders, foams and denture-retaining adhesives, mouth washes and similar oral antiseptic liquids, tobacco products, adhesives for gumming stamps, envelopes, labels and the like.

In using the sparing agent of this invention, it is incorporated in the material to be sweetened in the amount required to attain the desired level of sweetness. In general, attainment of the desired sweetness level can be achieved with as much as 23% less sweetener when the sparing agent is used as compared to sugar or sucrose alone. Moreover, the technique of sweetening materials with the sparing agent of the invention offers no difficulty as the agent is simply incorporated with the material to be sweetened. The agent may be added directly to the material or it may be first incorporated with a diluent to increase its bulk and added to the material. As diluent, if needed, one may use liquid or solid carriers, such as water, starch, sorbitol, salt, citric acid or other non-toxic substances compatible with the material to be sweetened.

While the invention has been described with respect to the use of the sucrose-fructose sweetening composition as the sole sweetening agent, it is to be understood that conventionally used sweetening agents, e.g. a minor amount of a high intensity sweetener such as aspartame, saccharin or the like, may be used together with the sucrose-fructose combination.

It may be noted that key factors in determining the perceived sweetness and suitability of various sweeteners in foodstuffs are the effects of other food ingredients, such as acids and flavours. The effect of acid on sweeteners has been reported by Cardello et al. (J. Food Sci. 44: 748-75l,l979) who summarized previous studies by stating that acids have been shown to have a wide variety of effects on subjective sweetness. These researchers reported their own results by stating "in the more acidic solutions, no advantage of fructose over sucrose is found at any sugar concentration".

While the invention has been described as being mainly concerned with foodstuffs mixes and other non-toxic formulations for human consumption, it is obviously within the scope of this invention that these sweetened compositions may be used for consumption by other creatures, such as farm and domestic animals.

The following Examples are provided to illustrate further the present invention (throughout the specification and claims, all parts, ratios and percentages are stated on a weight basis and temperatures are in degrees Celsius unless otherwise indicated):

### EXAMPLE 1

A sweetener blend was prepared by dry mixing 3.75 parts granulated sucrose and 3.75 parts crystalline fructose. The sweetener blend was used to prepare a dry cherry drink mix. Control formulae containing all sucrose and all fructose were also prepared for comparison purposes.

| CHERRY DRINK MIX FORMULAE | | | |
|---|---|---|---|
| INGREDIENTS | PARTS | | |
| | Sucrose Control | Fructose Control | Sucrose-Fructose Blend |
| Sucrose | 9.4 | - | - |
| Fructose | - | 8.3 | - |
| Sucrose-Fructose Blend | - | - | 7.5 |
| Citric Acid | 0.21 | 0.18 | 0.21 |
| Ascorbic Acid | 0.01 | 0.01 | 0.01 |
| Tricalcium Phosphate | 0.0015 | 0.0015 | 0.0015 |
| Maltodextrin (5 D.E) | 0.23 | 0.23 | 0.23 |
| Colour¹ | 0.0035 | 0.0035 | 0.0035 |
| Cherry Flavour² | 0.031 | 0.0285 | 0.031 |
| Total | 9.886 | 8.7535 | 7.986 |

| | | | |
|---|---|---|---|
| 1) Warner Jenkinson Colour No. 7425 | | | |
| 2) Universal Flavours | | | |

The above dry mixes were prepared by dry blending all ingredients. Ready to serve drinks were prepared by adding sufficient water to each sample so that the total weight is 100 parts. The sweetness level of each of the three beverages was comparable, even though the sucrose-fructose sweetened beverage contained 20.2% less sweetener than the sucrose sweetened control and 9.6% less sweetener than the fructose sweetened control. The caloric content of a 100g serving of the sucrose sweetened cherry beverage is about 39 calories while the caloric content of the sucrose-fructose sweetened cherry beverage is about 32 calories, which is an about 18% reduction in calories.

### EXAMPLE 2

A sweetener blend was prepared using 53 parts sucrose and 47 parts crystalline fructose. This blend was used to prepare a gelatin dessert product. Sucrose and fructose sweetened controls were prepared for comparison purposes.

| ORANGE GELATIN DESSERT MIX PRODUCTS | | | |
|---|---|---|---|
| INGREDIENTS | PARTS | | |
| | Sucrose Control | Fructose Control | Sucrose-Fructose Blend |
| Sucrose | 13.6 | - | - |
| Fructose | - | 12.02 | - |
| Sucrose-Fructose Blend | - | - | 10.66 |
| Gelatin | 1.47 | 1.41 | 1.47 |
| Adipic Acid | 0.26 | 0.25 | 0.26 |
| Disodium- Phosphate | 0.20 | 0.20 | 0.20 |
| Fumaric Acid | 0.18 | 0.176 | 0.18 |
| Orange Shade Colour | 0.001 | 0.001 | 0.001 |
| Orange Flavour | 0.031 | 0.029 | 0.031 |
| Total | 15.302 | 14.086 | 12.802 |
| Water added to prepare ready-to-serve gelatin dessert (parts) | 84.698 | 85.914 | 87.198 |

The dry gelatin mixes were prepared by dry blending all ingredients. Ready to serve gelatin dessert was prepared by adding the dry mix to the appropriate amount of boiling water, stirring and allowing to set. Sensory evaluation of the three dessert products showed all three products have equivalent sweetness. A 100g serving of the sucrose-fructose sweetened gelatin dessert contains about 16.5% fewer calories than the sucrose sweetened gelatin dessert and 9.3% fewer calories than the fructose sweetened gelatin dessert.

### EXAMPLE 3

The sweetener blend of Example 1 is used to prepare a reduced acid ingredient and reduced flavour ingredient version of the sucrose sweetened Cherry drink mix product of Example 1. A beverage is prepared using the following formula.

| INGREDIENTS | PARTS |
|---|---|
| Sucrose-fructose blend | 7.5 |
| Citric Acid | 0.18 |
| Ascorbic Acid | 0.01 |
| Tricalcium phosphate | 0.0015 |
| Maltodextrin (5 D.E.) | 0.23 |
| Colour¹ | 0.0035 |
| Cherry Flavour | 0.0285 |
| | 7.9335 |
| Water | 92.0465 |
| | 100.0 |

| | |
|---|---|
| 1) Warner-Jenkinson Colour No. 7425 | |

The sucrose-fructose sweetened formula contains 14.2% less citric acid and 8% less flavour than the all sucrose sweetened formula of Example 1. The perceived sweetness-acidity flavour evaluation is similar to that of the sucrose sweetened control described in Example 1.

### EXAMPLE 4

The sweetener blend of Example 1 is used to prepare a brownie product. The following ingredients were used to prepare a brownie mix:

| INGREDIENTS | PARTS |
|---|---|
| Sucrose-Fructose blend | 191.21 |
| Powdered Shortening | 69.55 |
| Cake Flour | 43.73 |
| All Purpose Flour | 62.73 |
| Maltodextrin 20 D.E. | 74.75 |
| Cocoa | 31.05 |
| Starco™ 447 Starch¹ | 6.44 |
| Dried Egg White | 3.19 |
| Salt | 2.54 |
| Dry Vanilla Flavour | 1.76 |
| Baking Soda | 0.13 |
| | 487.08 |

| | |
|---|---|
| 1) A.E. Staley Manufacturing Company | |

The above ingredients are dry blended in a mixing bowl. The following ingredients are then added and well blended with minimum beating.

| INGREDIENTS | PARTS |
|---|---|
| Corn Oil | 45.37 |
| Whole Egg | 35.95 |
| Water | 84.5 |
| Hershey Chocolate Syrup | 10.0 |
| | 175.82 |

The mixture was baked in a 190°C oven for 30 minutes. The resulting brownies were sweet and had a smooth, cake-like texture.

### EXAMPLE 5

Instant dry mix vanilla pudding was prepared using a sucrose-fructose sweetener blend and compared to all sucrose and all fructose sweetened vanilla puddings. The following formulations were prepared.

| INGREDIENTS | PARTS | | |
|---|---|---|---|
| | Sucrose Sweetened | Fructose Sweetened | Sucrose-Sweetened |
| Sucrose | 74.0 | - | 34.0 |
| Fructose | - | 74.0 | 29.0 |
| Durem 114 emulsifier¹ | 0.5 | 0.5 | 0.5 |
| Vegetable Oil | 0.5 | 0.5 | 0.5 |
| Disodium Phosphate | 0.6 | 0.6 | 0.6 |
| Tetrasodium Phosphate | 1.0 | 1.0 | 1.0 |
| Salt | 0.5 | 0.5 | 0.5 |
| Colour (No.8038 egg shade)² | 0.4ml | 0.4ml | 0.4ml |
| Imitation Vanilla Flavour | 3.0ml | 3.0ml | 3.0ml |
| STARCO™ 447 Starch³ | 20.0 | 17.5 | 18.4 |
| | 100.5 | 98.0 | 87.9 |

| | | | |
|---|---|---|---|
| 1) Durkee Foods | | | |
| 2) Warner-Jenkinson | | | |
| 3) A.E. Staley Manufacturing Company | | | |

A dry mix instant pudding composition was prepared by melting the Durem emulisifier and vegetable oil together and then coating the oil-emulsifier onto the sweetener component when mixing with a household mixer at low speed. The remaining dry ingredients were added and mixed into the oil-sweetener mixture.

A ready-to-serve pudding dessert was then prepared from each dry mix by adding each dry mix pudding composition to 450ml of cold milk and mixing with a mixer set at low speed. The pudding was mixed for two minutes and poured into serving cups. The ready to eat puddings had similar sweetness and viscosity levels. The sweetener blend comprising 54% sucrose and 46% fructose gave a sweetness equivalent to the all fructose or all sucrose sweetened puddings even though l4% less sweetener was used. Additionally, the use of the sucrose-fructose sweetener allowed the amount of starch used in the pudding formulations to be reduced. The sucrose-fructose sweetened pudding contained 8% less starch than the all sucrose pudding. The combination of less sweetener and less starch in the pudding sweetened with the sucrose-fructose sweetener provides the basis for a reduced calorie food product as compared to the sucrose sweetened control.

## Claims

1. The use of sucrose and fructose for the manufacture of a dry, reduced calorie foodstuffs mix comprising a saccharide-based sweetener together with at least one further foodstuffs component selected from starches and gelatin, the saccharide components of said sweetener consisting substantially entirely of sucrose and fructose in crystalline form in a weight ratio of from 1.85:1 to 1:22 and at least one of said further components being present in an amount less than that sufficient to achieve the same organoleoptic effect were the foodstuffs mix to be sweetened to the same degree by sucrose alone.

2. The use as claimed in claim 1 wherein sucrose and fructose are present in a weight ratio of from 1.5:1 to 1:1.22.

3. The use as claimed in claim 2 wherein sucrose and fructose are present in a weight ratio of from 1.22:1 to 1:1.22.

4. The use as claimed in any one of claims 1 to 3 in the form of a beverage, dessert or cake mix.

## Patentansprüche

1. Verwendung von Sucrose und Fructose zur Herstellung einer trockenen, kalorienreduzierten Nahrungsmittelmischung, umfassend einen Süßstoff auf Saccharidbasis zusammen mit wenigstens einer weiteren Nahrungsmittelkomponente, ausgewählt unter Stärken und Gelatine, wobei die Saccharidkomponenten des Süßstoffs im wesentlichen ausschließlich als Sucrose und Fructose in kristalliner Form und in einem Gewichtsverhältnis von 1,85:1 bis 1:1,22 vorliegen und wobei wenigstens eine der weiteren Komponenten in einer Menge vorliegt, die geringer als diejenige ist, die ausreicht, um den gleichen organoleptischen Effekt zu erzielen, wie wenn das Nahrungsmittelgemisch in gleichem Maße nur mit Sucrose gesüßt würde.

2. Verwendung nach Anspruch 1, worin Sucrose und Fructose in einem Gewichtsverhältnis von 1,5:1 bis 1:1,22 vorliegen.

3. Verwendung nach Anspruch 2, worin Sucrose und Fructose in einem Gewichtsverhältnis von 1,22:1 zu 1:1,22 vorliegen.

4. Verwendung nach einem der Ansprüche 1 bis 3 in Form einer Getränke-, Dessert- oder Kuchenmischung.

## Revendications

1. L'utilisation de saccharose et de fructose pour la fabrication d'un mélange alimentaire sec, à teneur réduite en calories, comprenant un édulcorant à base de saccharides, en même temps qu'au moins un autre composant alimentaire choisi parmi les amidons et la gélatine, les composants à base de saccharides dudit édulcorant étant constitués sensiblement totalement de saccharose et de fructose sous forme cristalline, en un rapport pondéral de 1,85:1 à 1:1,22, et au moins l'un desdits autres composants étant présent en une proportion inférieure à celle qui suffit pour parvenir au même effet organoleptique si le mélange alimentaire venait à être édulcoré au même degré par le saccharose seul.

2. L'utilisation telle que revendiquée dans la revendication 1, dans laquelle le saccharose et le fructose sont présents en un rapport pondéral de 1,5:1 à 1:1,22.

3. L'utilisation telle que revendiquée dans la revendication 2, dans laquelle le saccharose et le fructose sont présents en un rapport pondéral de 1,22:1 à 1:1,22.

4. L'utilisation telle que revendiquée dans l'une quelconque des revendications 1 à 3 sous la forme d'une boisson, d'un dessert ou d'un mélange pour gâteau.
